# EUROPEAN PATENT APPLICATION

(11) **EP 2 961 198 A2**
(43) Date of publication of application: **30.12.2015**
(21) Application number: 15173356.5
(22) Date of filing: 23.06.2015
(51) Int. Cl.: H04R 9/02

(54) **MOVING COIL DRIVE UNIT AND AUDIO DRIVERS INCORPORATING THE SAME**

(30) Priority: 24.06.2014 GB 201411218
(71) Applicant: Amina Technologies Limited, Cambridgeshire PE29 7DL (GB)
(72) Inventor: NEWLOVE, Richard, Huntingdon, Cambridgeshire PE29 7DL (GB); MIKALAUSKAS, Egidijus, Huntingdon, Cambridgeshire PE29 7DL (GB)
(74) Representative: Cassie, Matthew David

(57) **Abstract**

A moving coil drive unit for exciting a resonant member into a vibrational state is disclosed. The moving coil drive unit comprises a magnet assembly and a coil assembly comprising a voice coil arranged concentrically with the magnet assembly and configured such that the voice coil is moveable axially relative to the magnet assembly in use. The magnet assembly comprises a permanent magnet and one or more pole pieces. The magnet assembly is configured to provide an annular magnetic gap, the voice coil being suspended therein. The pole piece is configured to have a laminated structure comprising at least two spaced layers. The pole piece may include at least three spaced layers, preferably at least four layers. One or more of the layers of the pole piece may be shaped, in at least an region thereof surrounding the magnetic gap, so as to generally follow and guide the magnetic field lines emanating from the permanent magnet. A distributed mode vibrating panel loudspeaker comprising the moving coil drive unit arranged as an exciter is also disclosed. The distributed mode vibrating panel loudspeaker comprises a resonant member to be vibrationally excited in use and a backing frame supporting the resonant member. The exciter is supported by the backing frame and the coil assembly is mechanically coupled to the resonant member to be vibrationally excited in use.

## Description

### TECHNICAL FIELD

The present application discloses moving coil drive unit and audio driver apparatuses incorporating the moving coil drive units. There are disclosed in particular moving coil drive units provided as electro-dynamic exciters and audio driver apparatuses provided as distributed mode vibrating panel loudspeakers incorporating said exciters. In particular, the present application discloses moving coil drive units having generally cup-shaped pole pieces formed of plural layers typically of steel and configured to boost the strength of the usable magnetic field of the exciters, or to reduce the amount of steel needed to attain a particular magnetic field strength usable to drive the voice coil.

### BACKGROUND

Moving coil drive units are widely used to transduce an electrical audio signal to pistonic motion by suspending a voice coil conducting the signal in a magnetic field. By coupling the voice coil to a resonant member such as a diaphragm, speaker cone or the dome of a tweeter, the moving coil drive unit or "driver" can be used to convert an electrical audio signal to sound. The electroacoustic apparatus incorporating the moving coil drive unit may be a full-range or mid-range driver coupled to a loudspeaker cone, a woofer, sub-woofer or a tweeter.

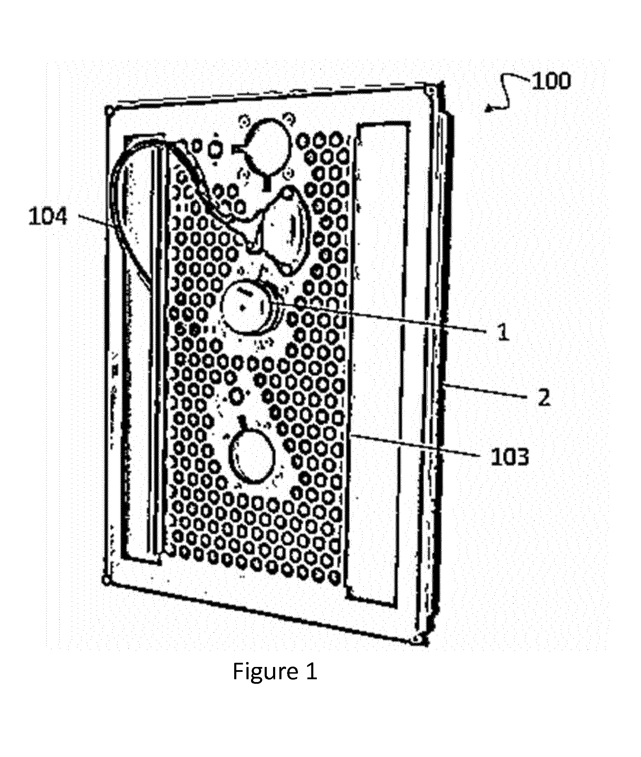

A type of driver referred as an electro-dynamic "exciter", for example of the type disclosed in international patent application publication number WO98/34320 A2, is one that is used as a transducer in, for example, distributed mode vibrating panel loudspeakers to vibrationally excite a resonant flat panel member thereof in response to the exciter being driven by an electrical audio signal. An example of a distributed mode flat panel loudspeaker is shown in Figure 1.

The distributed mode vibrating panel loudspeaker 100 has a resonant member 2, which may be a flat (or curved) panel preferably formed of a light weight (e.g. honeycomb) composite or monolithic structure, mounted to a frame 103 to be vibrationally excitable by a carefully positioned electro-dynamic exciter 1 also mounted to the frame (or alternatively inertially mounted). The exciter 1 is driven by an electrical signal received at terminals thereof from, for example, an audio amplifier unit (not shown), via conductive cables 104. When caused to vibrate by exciter 1, the resonant member 2 acts to amplify these vibrations in a similar manner to a soundboard of a violin or piano such that the distributed mode vibrating panel loudspeaker 100 produces sound from the electrical signal.

In these known exciters, a magnet assembly is provided that comprises a disc-shaped permanent magnet and two pole pieces provided on opposite faces of the permanent magnet. One of the pole pieces is formed in a cup-like shape to receive the permanent magnet and provide an annular gap in which there is a high magnetic field strength and in which a voice coil is suspended. The voice coil is mechanically coupled to the flat panel resonant member and when it is driven by an electrical signal such as from an audio amplifier, the voice coil, and so the flat panel resonant member, is caused by the magnetic field in the magnetic gap to move axially relative to the magnet assembly, so as to vibrationally excite the flat panel resonant member of the distributed mode vibrating panel loudspeaker.

The power output achieved by distributed mode vibrating panel loudspeakers depends, amongst other things, on the size of the flat panel resonant member and the specifications of the exciter, and is a determining factor in selecting a particular loudspeaker for a particular setting. It is therefore desirable to produce the power output required for a distributed mode vibrating panel loudspeaker efficiently, effectively and economically, or to increase the power output of known distributed mode vibrating panel loudspeakers.

### SUMMARY OF THE INVENTION

In view of the foregoing, and when viewed from one aspect, the present invention provides a moving coil drive unit for exciting a resonant member into a vibrational state, the moving coil drive unit comprising: a magnet assembly and a coil assembly comprising a voice coil arranged concentrically with the magnet assembly and configured such that the voice coil is moveable axially relative to the magnet assembly in use, the magnet assembly comprising a permanent magnet and one or more pole pieces, the magnet assembly being configured to provide an annular magnetic gap, the voice coil being suspended therein; wherein the or each pole piece is configured to have a laminated structure comprising at least two spaced layers of relatively low reluctance material interspersed with layers of relatively high reluctance material in at least an annular region of magnet assembly overlying the magnetic gap. The strength of the magnetic field in the magnetic gap in which the voice coil is received has a direct effect on the power output of the moving coil drive unit and the audio driver e.g. distributed mode vibrating panel loudspeaker in which it is incorporated. Therefore, in order to conserve the weight of the moving coil drive unit and to boost the power output of the audio driver e.g. distributed mode vibrating panel loudspeaker, high strength permanent magnets, such as non-ferrite magnets are often used. These include rare earth metal magnets, particularly neodymium-based alloy magnets. However, once the strongest available magnets have been used, it is not possible to further boost the magnetic field strength in the gap other than by using larger magnets. This is however undesirable as this increases the overall weight of the distributed mode vibrating panel loudspeaker and increases the cost of higher power output loudspeakers, particularly as the price of rare earth metals becomes ever higher.

By way of the present invention, the magnetic field strength within the magnetic gap can be increased, thereby increasing the power output of the moving coil drive unit (by way of the 'force factor') and any audio driver e.g. distributed mode vibrating panel loudspeaker, or tweeter or conventional audio driver in which it is incorporated, in an economic and efficient way. It has been found that by providing a layered or laminated pole piece having spaced layers (in at least the annular region surrounding the magnetic gap, the annular region at least being preferably overlying the magnetic gap) the magnetic field strength in the magnetic gap is boosted for an otherwise unchanged magnet assembly (i.e. compared to where a conventional single, uniform thickness pole piece of identical material and mass is used).

The result is that, by way of the present invention, the power output of a moving coil drive unit, and a distributed mode vibrating panel loudspeaker or other audio driver in which it is incorporated, can be boosted without having to increase the size of the magnet, which would otherwise result in a significant increase in weight and costs. Alternatively, a moving coil drive unit providing the same force factor and power output can now be made more efficiently and economically by requiring less steel to be used to provide the pole piece(s), and/or by allowing a smaller, lighter weight, and less costly permanent magnet to be used.

By providing a layered or laminated pole piece having spaced layers (in at least the annular region surrounding or overlying the magnetic gap) it has also been found that the magnetic reluctance back into the voice coil is reduced by at least 1-2% or more, which makes the high frequency performance of the drive unit more linear, improving the quality and clarity of the sound output from the audio driver to which it is coupled.

The air gaps provided by the layering or laminating of the pole pieces serve to better contain the magnetic field forward of the pole piece, by action of repeated step changes in magnetic permeability - or reluctance - at the material interfaces, which guide the magnetic flux. Generally, magnetic flux (i.e. the field lines) follow the path of least reluctance, and so interspersing layers of low reluctance material (i.e. the pole piece layers) with layers of high reluctance material (i.e. the gap material, typically air), causes the magnetic flux to be better contained in the pole piece and guided forwards towards the magnetic gap. Thus magnetic field leakage out of the back of the magnet assembly through the pole piece is reduced.

A number of possible magnet-pole piece geometries are possible within the scope of the present invention. The magnet may be disc shaped or toroidal. The geometry of the pole piece(s) is such that, taken together with the magnet, a magnetic gap is provided in which the voice coil is suspended in use. The pole pieces (at least one of which has a laminated structure comprising at least two spaced layers, preferably in a region surrounding the magnetic gap) channel the magnetic flux to provide a high magnetic field strength in the magnetic gap.

Optionally, the moving coil drive unit comprises a generally-cup-shaped pole piece, wherein the permanent magnet is generally disc-shaped and arranged inside the generally cup-shaped pole piece in a spaced relationship therewith to provide the annular magnetic gap. A disc shaped front pole piece, optionally also laminated, may also be provided to the front of the permanent magnet. Optionally, the pole piece is configured to have a laminated structure in at least an annular region thereof surrounding the magnetic gap, optionally overlying the magnetic gap. Preferably the laminated structure is provided in at least a region of the pole piece overlying the magnetic gap. Alternatively or in addition, the laminated structure may be provided in at least a region of the pole piece radially inwardly of the magnetic gap and/or radially outwardly of the magnetic gap. These arrangements add to the effectiveness of the magnetic containment of the pole pieces.

Optionally, the pole piece is configured to have at least three spaced layers, preferably at least four spaced layers. It is considered where a greater the number of layers is provided in the pole piece, the effect of the magnetic containment is greater, boosting the power output of the exciter. Preferably, a larger number or relatively thin layers are used as this has been found to be able to provide the same magnetic field strength in the magnetic gap using less material. The layer thickness is preferably 1.0mm or less, preferably 0.9mm or less, even more preferably 0.8mm or less, even more preferably 0.7mm or less, even more preferably 0.6mm or less, or even more preferably 0.5mm or less.

Optionally, one or more of the layers of the pole piece is provided by a mu metal. Mu metal is a is a nickel-iron alloy, composed of approximately 77% nickel, 16% iron, 5% copper and 2% chromium or molybdenum. Mu metal has a high magnetic permeability and provides a low reluctance path for magnetic flux that effectively acts as a barrier to the magnetic field lines and provides a high level of magnetic field containment and shaping. Preferably one or more of the middle layers of the pole piece is provided by a mu metal, and wherein preferably the outermost layers are not provided by a mu metal. It has been found that, providing one or more of the middle layers of the laminated structure as mu metal boosts the magnetic field strength in the magnetic gap. Conversely, providing a layer nearest the magnet as mu metal has been found to disrupt the shaping of the magnetic field and can actually reduce the magnetic field strength, whereas providing the outermost (most distal) layer as a mu metal has been found to have a negligible effect.

Optionally, one or more of the layers of the pole piece is shaped, in at least a region thereof surrounding the magnetic gap, so as to generally follow and guide the magnetic field lines emanating from the permanent magnet. Preferably, each of the layers of the pole piece is shaped, in at least a region thereof surrounding the magnetic gap, so as to generally follow and guide the magnetic field lines emanating from the permanent magnet. Shaping one or more of, or preferably all of the layers in this way serves to guide the magnetic field lines forward, towards the magnetic gap, and better contain the magnetic field, boosting the power output of the moving coil drive unit.

Preferably each of the layers of the pole piece is shaped, in at least a region thereof surrounding the magnetic gap, such that the resulting magnetic field strength in the magnetic gap is greater than for an equivalent magnetic assembly having a pole piece formed of a single layer of the same material and having the same mass. Optionally, one or more of said layers of the pole piece has a curved shape in said region thereof surrounding the magnetic gap.

Preferably the resulting magnetic field strength in the magnetic gap is greater than for an equivalent magnetic assembly having a pole piece formed of a single layer of the same material and having the same mass. The resulting magnetic field strength in the magnetic gap is preferably at least 3% greater, more preferably 5% greater, even more preferably 7% greater, or even more preferably 9% greater or more.

Optionally, the layers of the pole piece are non-integrally formed. For example, the layers of the pole piece may be formed separately and joined together, resulting in a 'laminated' structure having spacings between layers of the structure at least in some regions preferably surrounding the magnetic gap.

Optionally, the spacing between the layers of the pole piece in the region surrounding or overlying the magnetic gap may increase for layers further from the permanent magnet. It has been found that this boosts the effectiveness of the field line shaping and the magnetic field strength in the gap.

Optionally, at least one of the layers of the pole piece is arranged to be spaced apart from at least one adjacent layer of the pole piece in the region of magnet assembly radially inwardly of the magnetic gap and/or radially outwardly of the magnetic gap. For example, the outermost layer may be spaced apart to 'catch' the magnetic field leakage.

Optionally, layers of the pole piece are joined together to form an annular, axially extending wall of the pole piece. The axially extending wall may be coupled to a suspension resonant member of the moving coil drive unit that couples the magnet assembly to the voice coil assembly.

Optionally, one or more of the layers of the pole piece includes one or more apertures. Plural layers of the pole piece may be formed to have patterns of plural apertures. It has been found that providing apertures or even patterns of apertures in at least one or even each layer of the pole piece does not significantly degrade the magnetic containment of the pole piece, but at the same time can significantly reduce the weight and costs of the pole piece material, which is not insignificant.

Preferably, the permanent magnet is a non-ferrite magnet, more preferably a rare earth metal magnet, more preferably still a neodymium-based alloy magnet.

The magnet assembly is preferably suspended coaxially with the coil assembly by suspension means while permitting the voice coil to be moveable axially relative to the magnet assembly in use. The suspension means may comprise one or both of: a backing frame or housing of a distributed mode vibrating panel loudspeaker; a suspension resonant member of the moving coil drive unit arranged to couple the magnet assembly to the voice coil assembly such that the moving coil drive unit is configured to operate inertially in use.

Optionally, a carrier is coupled to the coil assembly and adapted for connection to a resonant member to be vibrationally excited in use. Optionally, the coil assembly further comprises a coil former resonant member having an annular portion extending in the magnet gap about which the voice coil is wound, wherein the coil former resonant member transmits axial movement of the voice coil in use to the resonant member to be excited (e.g. the loudspeaker cone or dome or the vibrating panel). Optionally, the moving coil drive unit further comprises a pair of electrical terminals electrically coupled to the voice coil for, in use, receiving an electrical signal and conducting said signal in the voice coil to cause the voice coil to move in the field of the permanent magnet.

The moving coil drive unit of the present invention can be used in conventional audio drivers including full- and mid-range drivers, woofers, and sub-woofers, tweeters, balanced mode radiators and as exciters in distributed mode vibrating panel loudspeakers.

In this regard, viewed from another aspect, the present invention provides a distributed mode vibrating panel loudspeaker comprising a moving coil drive unit as described above configured as an exciter. Optionally, the distributed mode vibrating panel loudspeaker further comprises a resonant member to be vibrationally excited in use and a backing frame supporting the resonant member, wherein the exciter is supported by the backing frame and the coil assembly is mechanically coupled to the resonant member to be vibrationally excited in use. The resonant member to be vibrationally excited is preferably a flat or curved panel, preferably having a lightweight composite or monolithic structure.

Viewed from yet another aspect, the present invention provides a tweeter or a conventional audio driver comprising a moving coil drive unit as described above. The conventional audio driver may be a full- or mid-range driver, woofer, or a sub-woofer. Here the resonant member to be excited is a cone or dome shaped membrane used to transmit the sound.

### BRIEF DESCRIPTION OF THE DRAWINGS

Certain preferred embodiments of aspects of the present invention will now be described, by way of example only, with reference to the accompanying drawings, in which:
Figure 1 illustrates a distributed mode vibrating panel loudspeaker incorporating an exciter coupled to a resonant member thereof to be vibrationally excited in use;
Figure 2 shows a cutaway view through the middle of a prior art exciter with the magnet assembly and coil assembly separated;
Figure 3 shows a cutaway view through the middle of the prior art exciter shown in Figure 2 with the magnet assembly coupled to the voice coil assembly which is in turn coupled to the resonant member to be excited of a distributed mode vibrating panel loudspeaker;
Figure 4 shows a cutaway view through the middle of a moving coil drive unit provided as an intertial exciter in accordance with an embodiment of aspects of the present invention with the magnet assembly coupled to the voice coil assembly which is in turn coupled to the resonant member to be excited of a distributed mode vibrating panel loudspeaker;
Figure 5A shows the results of finite element modelling of the magnetic field of a prior art exciter;
Figure 5B shows the results of finite element modelling of the magnetic field of a moving coil drive unit provided as an intertial exciter in accordance with an embodiment of aspects of the present invention having a layered, generally cup-shaped pole piece of equivalent mass that of the exciter shown in Figure 5A;
Figure 5C shows, for comparison, the results of finite element modelling of the magnetic field of an exciter not in accordance with aspects of the present invention in which a solid pole piece is provided (i.e. having no air gaps) having the same spatial extent as the pole piece of the exciter shown in Figure 5B;
Figure 6A shows a moving coil drive unit in accordance with another illustrative embodiment of aspects the invention having a magnet assembly of a different geometry to that of the embodiment shown in Figure 4; and
Figure 6B shows a moving coil drive unit in accordance with yet another illustrative embodiment of aspects the invention having a magnet assembly of a different geometry to that of the embodiment shown in Figure 4.

### DETAILED DESCRIPTION OF THE EXAMPLE EMBODIMENTS

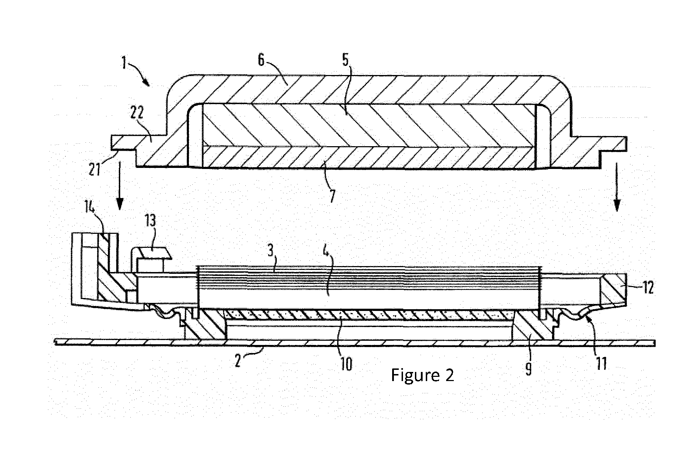

By way of explanation, to facilitate understanding of the present invention, a description of the structure of a conventional moving coil drive unit provided as an electrodynamic inertial vibration exciter will now be provided with reference to Figure 2.

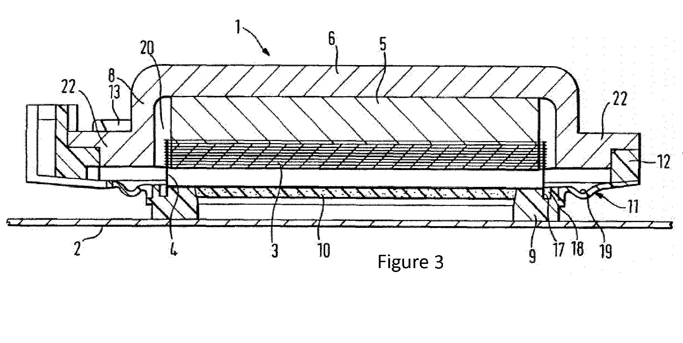

The exciter 1 comprises a coil assembly 3,4 and a magnet assembly 5,6,7 adapted to move axially relative to each other. The exciter 1 is adapted to be fixed in any convenient fashion to the resonant member 2 of a distributed mode vibrating panel loudspeaker 100 (see Figure 1) to be excited to impart bending wave energy to the resonant member 2 when an electrical signal is applied thereto. In the illustrated arrangement shown in Figures 2 and 3 the exciter 1 is coupled only to and is supported only by the resonant member and so the magnet assembly itself 5,6,7 forms an inertial mass to cause the coil assembly 3,4 and resonant member 2 (in this case a flat panel) to vibrate in use and so produce an amplified sound.

The coil assembly 3,4 comprises a voice coil 3, e.g. of wire, wound on a tubular coil former 4 which is supported at its lower end 17, as seen in Figure 2, in an annular groove 18 in an annular coil carrier 9 which forms a foot by which the coil assembly is secured e.g. by means of an adhesive or the like, to a face of the resonant member 2. Alternatively the coil carrier could be secured to the resonant member 2 by fixing means, e.g. fasteners. Such fasteners may be releasable. Thus a bayonet connector may be provided, one part of which is fixed to the resonant member 2 and the other part of which is formed integrally with the exciter 1. The coil former 4 may be secured in the groove 18 by means of an adhesive.

As shown in Figures 2 and 3, the coil assembly 3,4 and magnet assembly 5,6,7 are formed separately (see Figure 2) and then coupled together (see Figure 3) for later use through a suspension component or assembly. The coil assembly 3,4 is in the exciter shown in Figures 2 and 3 surrounded by an annular coupling resonant member 12 which is connected to the coil assembly carrier 9 by a resilient annular suspension diaphragm 11 e.g. a 'spider' of rubberlike material which is formed with a concentric annular corrugation 19 to facilitate axial movement of the coupling resonant member relative to the carrier. The carrier 9 and the coupling resonant member 12 may be of hard plastics and may be co-moulded together with the resilient diaphragm 11 to form an integrated suspension component or assembly. The interior of the annular carrier 9 is closed by a disc 10 e.g. of foamed plastics, to form a dust seal closing the interior of the exciter. However, this direct coupling, for example through an integrated suspension component or assembly is not essential. For example, the magnet assembly 5,6,7 may be suspended by backing frame 103 of a distributed mode vibrating panel loudspeaker 100, fixed in place relative to coil assembly 3,4, which is in turn fixed in place to resonant member 2. In this case, the magnet assembly 5,6,7 and coil assembly 3,4 may be movable axially relative to each other without being directly coupled. However, a direct coupling may also be provided which helps ensure radial alignment and axial positioning of the magnet assembly 5,6,7 and coil assembly 3,4, which is important to ensure efficiency and power output.

While in embodiments of the invention the geometry and configuration of the magnet assembly can vary widely within the scope of the claimed invention, in the example exciter illustrated in Figure 2 the magnet assembly 5,6,7 comprises a generally disc-shaped permanent magnet 5 sandwiched between opposed pole pieces 6,7. The front pole piece 7 is also generally disc-shaped and is co-extensive with the magnet 5. The back pole piece 6 is generally cup-shaped and is formed with a downturned flange 8 surrounding the magnet 5 and pole piece 7 to form an annular magnetic gap 20 in which a high magnetic field is produced and in which the voice coil 3 of the coil assembly is received/suspended in use (see Figure 3) when the coil assembly 3,4 and magnet assembly 5,6,7 are suspended in position relative to each other.

The free end of the flange 8 is formed as an outwardly extending lip 22 which is formed with an annular recess 21 at its outer end to define a socket into which the coupling resonant member 12 can be snugly received in the manner of a spigot and socket joint firmly to hold the magnet assembly and the coil assembly together. Snap-action clips 13 on the coupling resonant member 12 engage the lip 22 to prevent disengagement.

The coupling resonant member 12 is formed with a pair of terminal flanges 14 carrying electrical terminals (not shown) which are electrically connected to the voice coil 3 via coil wires or tails 16, whereby the coil can be connected to a signal source and energised thereby.

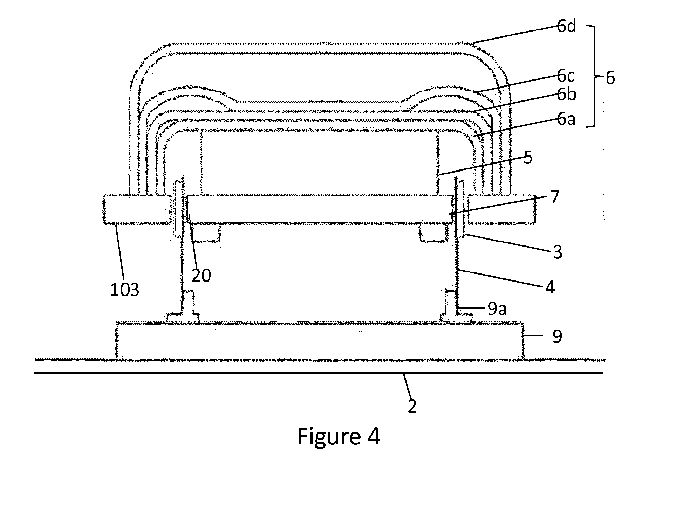

Reference will now be made to Figure 4 which illustrates a cut-away view of a moving coil drive unit configured as an exciter 51 in accordance with an embodiment of the present invention. The exciter 51 of Figure 4 is illustrated in a slightly simplified manner, but its construction can in practice be generally identical to the conventional exciter shown and described in relation to Figures 2 and 3, and so equivalent reference numbers are used to refer to equivalent features. As can be seen from Figures 2 and 3, in conventional exciters, the generally cup-shaped pole piece 6 is formed from a single layer of material, such as non-martensitic steel. However, as can be seen in Figure 4, in exciters in accordance with embodiments of the present invention, the generally cup-shaped pole piece 6 is configured to have, in at least an region thereof surrounding the magnetic gap 20 (in this case in at least the annular region overlying the magnetic gap 20), at least two spaced layers. The generally cup-shaped pole piece of the exciter 51 of embodiments of the present invention may be configured to have, in at least an annular region thereof overlying the magnetic gap 20, at least three spaced layers, preferably at least four layers.

Indeed, the exciter 51 of the exemplary embodiment shown in Figure 4 has four layers 6a,6b,6c,6d, which are formed separately, for example by moulding, and joined together. The layers 6a,6b,6c,6d of the generally cup-shaped pole piece are each shaped, in an annular region thereof overlying the magnetic gap, so as to generally follow and guide the magnetic field lines emanating from the permanent magnet forward, towards the magnetic gap 20. The forwardmost layer 6a, nearest to the permanent magnet, is, in an annular region thereof overlying the magnetic gap 20, spaced apart from the adjacent layer 6b by an air gap. The layer 6b is then spaced from the next adjacent layer 6c by a further, in this case, larger, air gap. The layer 6c is then spaced from the next adjacent, outermost layer 6d by a further, in this case, even larger, air gap. The outermost layer 6d is also arranged to be spaced apart from adjacent layer 6c in the region of magnet assembly radially inwardly of the magnetic gap.

While in the embodiment shown in Figure 4, each of the layers 6a,6b,6c,6d is provided by steel, in other embodiments, one or more of the layers of the generally-cup-shaped pole piece may include one or more layers provided by mu-metal. The mu-metal layer(s) is preferably one or more of the middle layers and not the outermost layers. This has been found to significantly boost the shaping effect and strength of the magnetic field in the magnetic gap.

While in the embodiment shown in Figure 4, each of the layers 6a,6b,6c,6d is solid, in other embodiments, one or more of the layers of the generally-cup-shaped pole piece may include one or more apertures. It has been found that designs for the layered pole pieces can be produced with layers with even patterns of plural apertures that save weight while also achieving a high magnetic field strength in the magnetic gap.

At the radially outer extent of the generally-cup-shaped pole piece 6 the layers 6a,6b,6c,6d are joined together to form the annular, axially extending wall of the pole piece. The magnet assembly 5,6,7 of exciter 51 is suspended coaxially with the coil assembly 3,4 by suspension means while permitting the voice coil to be moveable axially relative to the magnet assembly in use. As shown in Figure 4, the suspension means comprises a backing frame 103 of a distributed mode vibrating panel loudspeaker, which suspends the magnet assembly 5,6,7 coaxially with the coil assembly 3,4 with voice coil 3 in magnetic gap 20. Additionally, although not shown in Figure 4, a suspension resonant member of the exciter (such as a spider, as shown in Figures 2 and 3) is also provided, coupling the magnet assembly to the voice coil assembly, further ensuring radial and axial alignment. Alternatively, the exciter may be mounted to operate intertially.

Additionally, a carrier 9 is coupled to the coil assembly 3,4 through coupling 9a and is connected to a resonant member 2 of a distributed mode vibrating panel loudspeaker (or, in other embodiments, a conventional audio driver or tweeter) to be vibrationally excited in use. The resonant member 2 to be vibrationally excited is in the illustrated embodiment a flat panel, preferably having a lightweight composite or monolithic structure, in this case provided as a honeycomb sandwich structure.

The air gaps and the shaped magnetic interfaces formed by the layers 6a,6b,6c,6d serve to better contain the magnetic field and increase the magnetic field strength in the magnetic gap 20. Alternatively, instead of an airgap, the gaps between the layers of the generally cup-shaped pole piece 6 may be filled with another material having a high magnetic reluctance.

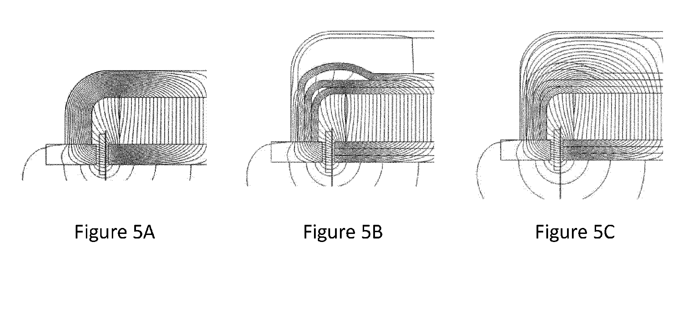

As a result, in accordance with embodiments of the invention, the resulting magnetic field strength in the magnetic gap is greater than for an equivalent magnetic assembly having a generally cup-shaped pole piece formed of a single layer of the same material and having the same mass. As we will now show, with reference to Figure 5, the resulting magnetic field strength in the magnetic gap 20 is greater for the embodiment shown in Figure 4 than for an equivalent magnetic assembly having a generally cup-shaped pole piece formed of a single layer of the same material and having the same mass.

For comparison, as shown in Figure 5A, a model of a conventional exciter having a solid pole piece 6 in accordance with the arrangement shown in Figures 2 and 3 was built using Finite Element Analysis software, and the resulting magnetic field was simulated using the software. The resulting magnetic field strength is shown in Figure 5 as a 'heat map', with lighter shaded regions having greater flux density and field strength. In the conventional exciter shown in Figure 5A, the modelled average magnetic field strength B in the magnetic gap 20 was 0.0608 Teslas (T). The amount of steel used for the solid pole piece 6 was 1508.2 cubic mm. The resulting force factor B.L of the conventional exciter (where L is the length of the voice coil in the gap, in this case 87.35 turns), which is also a measure of the power output or efficiency of the exciter, was modelled to be 5.31.

As shown in Figure 5B, a model of an exciter in accordance with the embodiment of the invention shown in Figure 4 was built, and the total amount of steel used for the layered pole piece 6 was the same as that for the conventional exciter, at 1508.2 cubic mm. The exciter was otherwise identical to that shown in Figure 5A. As a result of the layered pole piece in accordance with the present invention, the modelled average magnetic field strength B in the magnetic gap 20 was 0.0661 Teslas (T) and the resulting force factor B.L of the exciter of the embodiment of the invention was modelled to be 5.78. This represents a 9.6% increase in power output or efficiency for the same amount of pole piece material.

For further comparison, as shown in Figure 5C, a further model of an exciter was built in which the full spatial extent of the generally cup-shaped pole piece in Figures 4 and 5B is filled completely with steel (i.e. as illustrated in Figure 5B there are no air gaps present), but in which the exciter was otherwise identical to that shown in Figure 5A. Here, the total amount of steel used for the filled pole piece was 80.4% greater than for the layered pole piece exciter shown in Figures 4 and 5B at 2720.6 cubic mm. However, the increase in the magnetic field strength B in the magnetic gap 20 compared to the layered structure of Figures 4 and 5B was relatively small at only 3.3%, i.e. 0.0683 Teslas (T). The resulting force factor B.L of the exciter having the filled pole piece was modelled to be 5.97. Thus, a significant (80%) increase in the amount of steel used in the filled/solid pole piece, relative to a layered pole piece of the same spatial extent, leads only to a marginal (3.3%) increase in power and efficiency.

Thus it can be seen that the present invention of providing a layered pole piece can lead to significant increases in the effective power output or efficiency of an electro-dynamic exciter or other moving coil drive unit, and the distributed mode vibrating panel loudspeaker or other conventional audio driver or tweeter in which it is incorporated, by merely changing the structure of the pole piece without having to increase the amount of material used in the pole piece or the strength of the permanent magnet. Thus the present invention enables higher power output exciters and distributed mode vibrating panel loudspeakers to be provided without having to increase their weight or material costs. Given that the permanent magnet 5 is an expensive neodymium-based alloy magnet (or another non-ferrite magnet, preferably another rare earth metal magnets), the increased cost of a stronger permanent magnet can be avoided when providing a higher power output exciter and distributed mode vibrating panel loudspeaker. Alternatively, by way of the present invention, the size and material cost of the permanent magnet or pole piece can be reduced to provide an moving coil drive unit and distributed mode vibrating panel loudspeaker or tweeter or conventional audio driver of the same power output.

It should be emphasized that the above-described embodiments of the present invention are merely possible examples of implementations, merely set forth for a clear understanding of the principles of the invention. Many variations and modifications may be made to the above-described embodiment(s) of the invention without departing substantially from the scope of the invention, defined by the appended claims. All such modifications and variations are intended to be included herein within the scope of this disclosure and the present invention and protected by the following claims.

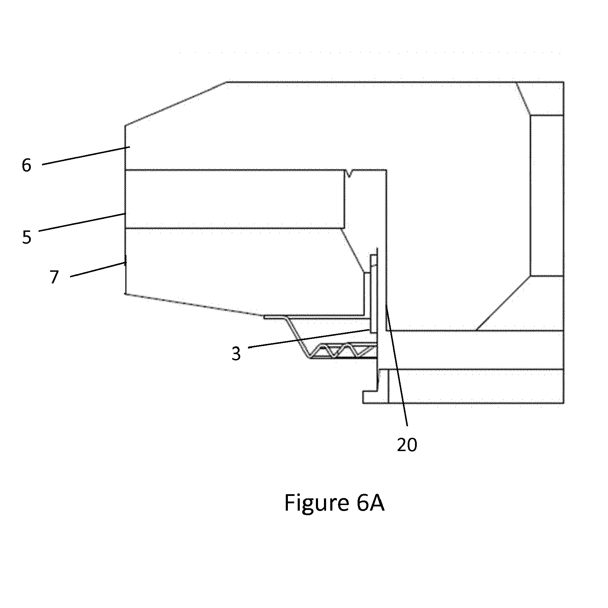

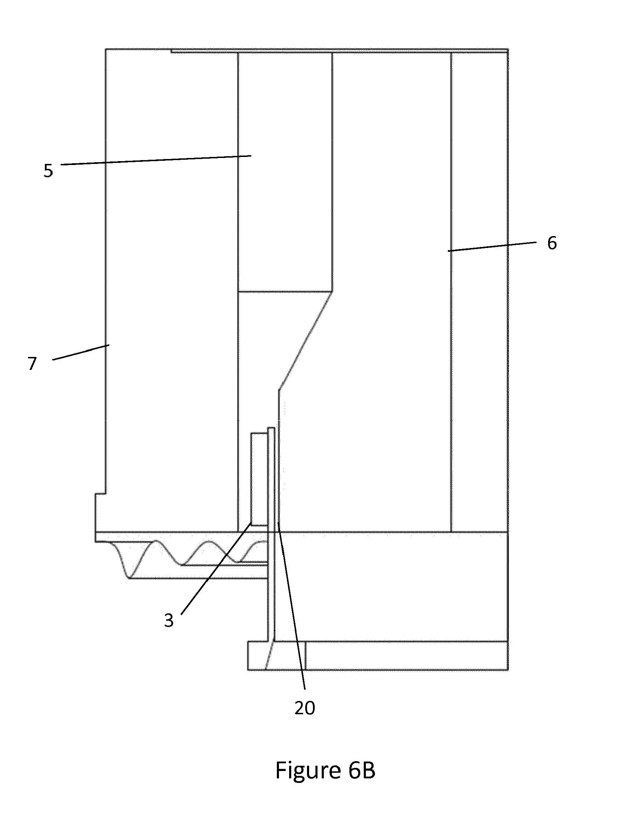

For example, as indicated above, the present invention can be realised in moving coil drive units in which the magnet assembly has a different geometry. For example in the magnet assembly the permanent magnet may be generally toroidal rather than disc shaped. For example, Figure 6A shows a cut-away through an edge portion of a moving coil drive unit arranged as an exciter having a different geometry to that shown in Figure 4. Here the permanent magnet 5 is toroidal in shape and is arranged radially outside/externally to the magnetic gap 20 formed by pole pieces 6 and 7, one or both of which have a laminated structure (not shown) of spaced, optionally shaped layers to guide the magnetic field towards the gap 20 to provide a high magnetic field strength in the region of the voice coil 3. Figure 6B shows a cut-away through an edge portion of another moving coil drive unit arranged as an exciter having a different geometry to that shown in Figure 4 and Figure 6A. Here the permanent magnet 5 is again toroidal and is arranged such that it itself overlies the magnetic gap 20 formed by pole pieces 6 and 7, one or both of which have a laminated structure (not shown) of spaced, optionally shaped layers to guide the magnetic field towards the gap 20 to provide a high magnetic field strength in the region of the voice coil 3.

## Claims

1. A moving coil drive unit for exciting a resonant member into a vibrational state, the moving coil drive unit comprising:
a magnet assembly and a coil assembly comprising a voice coil arranged concentrically with the magnet assembly and configured such that the voice coil is moveable axially relative to the magnet assembly in use, the magnet assembly comprising a permanent magnet and one or more pole pieces, the magnet assembly being configured to provide an annular magnetic gap, the voice coil being suspended therein;
wherein the or each pole piece is configured to have a laminated structure comprising at least two spaced layers of relatively low reluctance material interspersed with layers of relatively high reluctance material in at least an annular region of magnet assembly overlying the magnetic gap.

2. A moving coil drive unit as claimed in claim 1, comprising a generally-cup-shaped pole piece, wherein the permanent magnet is generally disc-shaped and arranged inside the generally cup-shaped pole piece in a spaced relationship therewith to provide the annular magnetic gap.

3. A moving coil drive unit as claimed in claim 1 or 2, wherein the pole piece is configured to have at least three spaced layers of relatively low reluctance material and optionally wherein one or more of the layers of the pole piece is provided by a mu metal.

4. A moving coil drive unit as claimed in any preceding claim , wherein one or more or all of the layers of the pole piece is shaped, in at least a region thereof surrounding the magnetic gap, so as to follow and guide the magnetic field lines emanating from the permanent magnet.

5. A moving coil drive unit as claimed in any of claims 1 to 4, wherein the resulting magnetic field strength in the magnetic gap is greater than for an equivalent magnetic assembly having a pole piece formed of a single layer of the same material and having the same mass.

6. A moving coil drive unit as claimed in any preceding claim, wherein the layers of the pole piece are non-integrally formed by the layers of the pole piece having been formed separately and joined together.

7. A moving coil drive unit as claimed in any preceding claim, wherein the spacing between the layers of the pole piece in the region surrounding the magnetic gap increases for layers further from the permanent magnet.

8. A moving coil drive unit as claimed in any preceding claim, wherein at least one of the layers of the pole piece is arranged to be spaced apart from at least one adjacent layer of the pole piece in the region of magnet assembly radially inwardly of the magnetic gap and/or radially outwardly of the magnetic gap.

9. A moving coil drive unit as claimed in any preceding claim, wherein one or more of the layers of the pole piece includes one or more apertures and optionally wherein plural layers of the pole piece are formed to have patterns of plural apertures.

10. A moving coil drive unit as claimed in any preceding claim, wherein the permanent magnet is a neodymium-based alloy magnet.

11. A moving coil drive unit as claimed in any preceding claim, wherein the magnet assembly is suspended coaxially with the coil assembly by suspension means while permitting the voice coil to be moveable axially relative to the magnet assembly in use and optionally wherein the suspension means comprises one or both of: a backing frame of a audio driver; a suspension resonant member of the moving coil drive unit arranged to couple the magnet assembly to the voice coil assembly such that the moving coil drive unit is configured to operate inertially in use.

12. A moving coil drive unit as claimed in any preceding claim, further comprising a carrier coupled to the coil assembly and adapted for connection to a resonant member to be vibrationally excited in use and / or optionally wherein the coil assembly further comprises a coil former resonant member having an annular portion extending in the magnet gap about which the voice coil is wound, wherein the coil former resonant member transmits axial movement of the voice coil in use to the resonant member to be excited.

13. A distributed mode vibrating panel loudspeaker comprising a moving coil drive unit as claimed in any preceding claim configured as an exciter.

14. A distributed mode vibrating panel loudspeaker as claimed in claim 13, further comprising a resonant member to be vibrationally excited in use and a backing frame supporting the resonant member, wherein the exciter is supported by the backing frame and the coil assembly is mechanically coupled to the resonant member to be vibrationally excited in use.

15. A tweeter or a conventional audio driver or balanced mode radiator comprising a moving coil drive unit as claimed in any of claims 1 to 12.
